# EUROPÄISCHE PATENTSCHRIFT

(11) **EP 3 814 717 B1**
(45) Veröffentlichungstag und Bekanntmachung des Hinweises auf die Patenterteilung: **06.07.2022**
(21) Anmeldenummer: 19732609.3
(22) Anmeldetag: 19.06.2019
(51) Int. Cl.: G01B 7/12, F16H 57/01

(54) **VERSCHLEISSÜBERWACHUNGSVORRICHTUNG UND KUGELGEWINDETRIEB**
WEAR MONITORING DEVICE AND BALL SCREW DRIVE
DISPOSITIF DE SURVEILLANCE D'USURE ET VIS À BILLES

(30) Priorität: 29.06.2018 DE 102018115847
(43) Veröffentlichungstag der Anmeldung: 05.05.2021
(73) Patentinhaber: Sensitec GmbH, 35578 Wetzlar (DE)
(72) Erfinder: GLENSKE, Claudia, 35638 Leun (DE); WEBER, Sebastian, 35584 Wetzlar (DE)
(74) Vertreter: Spachmann, Holger
(86) Internationale Anmeldenummer: PCT/EP2019/066204
(87) Internationale Veröffentlichungsnummer: WO 2020/002092

(56) Entgegenhaltungen:
- DE-A1- 3 721 127
- DE-A1- 4 136 527
- DE-A1-102010 017 113
- DE-T2- 69 011 907
- US-A- 4 103 222
- US-A1- 2008 257 080

## Beschreibung

Die vorliegende Erfindung betrifft eine Verschleißüberwachungsvorrichtung für ein Maschinenelement, welches einen Umlauf von ferromagnetischen Wälzkörpern aufweist, insbesondere für ein Kugelgewindetrieb oder ein Linearlager, zur Verschleißüberwachung der Wälzkörper.

### STAND DER TECHNIK

In verschiedenen mechanischen Anwendungsgebieten werden Maschinenelemente, beispielsweise Lager, Führungen, Getriebe oder Antriebe, bei denen zur Verminderung der Reibung zwischen verschiedenen Komponenten des Maschinenelements Wälzkörper eingesetzt, um damit die relative Bewegung der verschiedenen Komponenten des Maschinenelements zueinander extrem zu erleichtern. Als Wälzkörper werden beispielsweise Kugeln, Rollen, Tonnen, Nadeln, Kegel oder andere Rotationskörper eingesetzt, die beispielsweise aus Stahl, Keramik oder speziellen, extraharten Kunststoffen hergestellt sind. Bei manchen Ausführungen derartiger Maschinenelemente sind Wälzkörperkäfige vorgesehen, welche die einzelnen Wälzkörper voneinander trennen.

Bei anderen Maschinenelementen ist der Einsatz solcher Wälzkörperkäfige jedoch nicht möglich. Derartige Maschinenelemente weisen konstruktionsbedingt einen endlosen Umlauf von Wälzkörpern auf, bei denen die Wälzkörper in einem geschlossenen Kreislauf zirkulieren. Oftmals werden die Wälzkörper ausgehend von einem Startpunkt nur in einer Richtung reibungsmindernd belastet und werden in der entgegengesetzten Richtung lastfrei durch einen Rücklaufkanal zum Startpunkt zurückbefördert. In der Regel liegen die Wälzkörper in diesem Umlauf nahezu dicht an dicht, wobei jedoch zur Gewährleistung eines gewissen Spiels ein bis drei Wälzkörper weniger angeordnet sind, als es die maximale Wälzkörperkapazität des Umlaufs gestatten würde. Beispiele für solche Maschinenelemente sind Kugelgewindetriebe oder Linearlager.

Die Wälzkörper unterliegen während des Betriebs des Maschinenelements einem Verschleiß, der dazu führt, dass sich ein zwischen den Komponenten des Maschinenelements bestehendes Spiel, beispielsweise ein Lagerspiel, mit zunehmender Betriebsdauer vergrößert. Dies kann zu einem Totalausfall des Maschinenelements führen, was unter Umständen eine Havarie einer übergeordneten Maschine und/oder eine Zerstörung eines bearbeiteten Werkstücks zur Folge haben kann.

Die DE 10 2010 017 113 A1 zeigt einen Kugelgewindetrieb, in dessen als beweglicher Körper bezeichneter Mutter eine Sensoreinrichtung mit einem Magnetelement und einem Hallelement vorgesehen ist. Hierdurch kann die Umlauffrequenz der Rollkörper ermittelt und mit einem vorgegebenen Wert verglichen werden, wobei ein Alarm ausgegeben werden kann, wenn dieser Wert unterschritten wird. Weiterhin kann festgestellt werden, ob eine Vorspannung zwischen den Rollkörpern und dem Laufkanal existiert oder nicht. Bei vorhandener Vorspannung rollen die Rollkörper im Laufkanal ab, während bei nicht vorhandener Vorspannung die Rollkörper im Laufkanal gleiten, was dazu führt, dass die erfasste Umlauffrequenz nicht periodisch ist. Allerdings wird hierbei weder eine Verschleißermittlung der Rollkörper selber angesprochen, noch ist dies mit einer dort vorgestellten Vorrichtung möglich, so dass bei der Positionserfassung des Kugelgewindeantriebs ein Verschleiß der Rollkörper nicht berücksichtigt werden kann.

Aus der DE 690 11 907 T2 geht eine Positionserfassungsvorrichtung für einen Kugelgewindetrieb oder eine Linearführung mit einem Umlauf von magnetischen Kugeln hervor, wobei deren Positionen durch Änderungen der Reluktanz in verschiedenen Magnetkreisen ermittelt werden können. Dabei wird ausgenutzt, dass ein Verschiebungsbetrag jeder magnetischen Kugel proportional zum Drehungsbetrag der Spindel ist und der Drehungsbetrag der Spindel seinerseits proportional zur linearen Verschiebung des Gleitabschnitts oder der Mutter ist. Die Positionsbestimmung der Kugeln erfolgt dabei auf der Grundlage einer Reluktanzveränderung entsprechend einer Verschiebung der Kugeln, wobei ein Zyklus der Reluktanzveränderung durch die dem Durchmesser der Kugel entsprechende Verschiebung bestimmt ist. Auch diese Druckschrift gibt dem Fachmann keine Lehre zur Ermittlung des Kugeldurchmessers selbst bzw. der Einfluss einer verschleißbedingten Verringerung des Kugeldurchmessers auf die Messgenauigkeit der Positionserfassungsvorrichtung.

DE 37 21 127 A1 offenbart einen Radsensor zur Erfassung des Durchmessers eines Rades umfassend zwei in geometrisch festem Abstand zueinander angeordnete induktive Sensoren wobei zur Auswertung der Quotient aus der Summe der Maximalwerte der beiden Sensorsignale herangezogen wird.

Es ist die Aufgabe der vorliegenden Erfindung, eine Verschleißüberwachung bereitzustellen, die es ermöglicht, einen Verschleiß der Wälzkörper zu erkennen.

### OFFENBARUNG DER ERFINDUNG

Die Lösung der Aufgabe erfolgt durch eine Verschleißüberwachungsvorrichtung mit den Merkmalen des Anspruchs 1. Vorteilhafte Ausgestaltungen der Erfindung sind Gegenstand von Unteransprüchen.

Es wird eine Verschleißüberwachungsvorrichtung für ein Maschinenelement, welches einen Umlauf von ferromagnetischen Wälzkörpern aufweist, insbesondere für einen Kugelgewindetrieb oder ein Linearlager, zur Verschleißüberwachung der Wälzkörper gemäß Anspruch 1 vorgeschlagen.

Das Messprinzip der erfindungsgemäßen Verschleißüberwachungsvorrichtung beruht darauf, dass die Wälzkörper aufgrund ihrer ferromagnetischen Eigenschaften den Verlauf der Feldlinien des Messmagnetfelds beeinflussen, so dass gegenüber dem unbeeinflussten Messmagnetfeld durch die Wälzkörper lokale Veränderungen der Flussdichte erzeugt werden, die durch die Magnetfeldsensoranordnung detektiert werden können. Um diese lokalen Veränderungen des Messmagnetfelds zu bewirken, ist es erforderlich, dass die Wälzkörper aus einem ferromagnetischen Material, beispielsweise Eisen, Cobalt oder Nickel, gefertigt sind oder ausreichende Anteile von ferromagnetischem Material enthalten. Ebenso ist denkbar, dass die Wälzkörper permanentmagnetische Eigenschaften aufweisen, und beispielsweise ein eigenes Magnetfeld erzeugen können. In diesem Fall kann ggf. auch auf einen Magneten für ein Messmagnetfeld verzichtet werden.

Der Erfindung liegt der Gedanke zugrunde, dass ein Verschleiß der Wälzkörper mit einer Reduzierung des Umfangs bzw. des Durchmessers der Wälzkörper einhergeht, die auf Materialabrieb und/oder Verformung der Wälzkörper zurückzuführen ist. Wenn die umlaufenden Wälzkörper dicht aneinander anliegend die Magnetfeldsensoranordnung passieren, führt das dazu, dass sich der Pitch, d. h. der Abstand der Wälzkörpermittelpunkte, mit zunehmender Verminderung des Durchmessers der Wälzkörper verringert. In dem Zusammenhang ist das Merkmal, wonach umlaufende Wälzkörper die Messpositionen dicht aneinander anliegend passieren, so zu verstehen, dass zwischen zwei benachbarten Wälzkörpern zumindest in dem Bereich der Messpositionen und den dazwischenliegenden Messpositionen liegenden Bereich kein Zwischenraum vorhanden ist, d. h. die benachbarten Wälzkörper aneinander anstoßen. Damit eine Messung der Flussdichte des Messmagnetfelds möglich ist, ist die Magnetfeldsensoranordnung innerhalb des Messmagnetfelds angeordnet. Für die Durchführung des Vergleichs der gemessenen Flussdichten und die Ermittlung der Durchmesser bzw. der Änderungen der Durchmesser der Wälzkörper ist es vorteilhaft, dass sich das Maschinenelement in Betrieb befindet. Bei einer Verlaufsbewegung der Wälzkörper in Umlaufrichtung kann die Magnetfeldsensoranordnung einen sinusförmigen Verlauf bestimmen, wobei zwei in Umlaufrichtung räumlich versetzte Magnetfeldsensoren auf Basis einer sich ergebenden Phasenverschiebung einen Verschleiß bestimmen können

Bei der erfindungsgemäßen Verschleißüberwachungsvorrichtung wird ausgenutzt, dass sich bei einer verschleißbedingten Verminderung des Wälzkörperdurchmessers der Pitch, also der Abstand zwischen zwei benachbarten Wälzkörpern, genauer der Abstand zwischen deren Mittel- oder Schwerpunkten, verringert.

Da der Abstand der Messpositionen fest vorgegeben ist, führt die Verringerung des Durchmessers dazu, dass sich die jeweiligen an der ersten und der zweiten Messposition gemessenen Flussdichten für unterschiedliche Wälzkörperdurchmesser bei ansonsten gleichen Bedingungen voneinander unterscheiden.

Wenn beispielsweise zwei benachbarte Wälzkörper betrachtet werden, deren Schwerpunkte sich ausgehend von einem ursprünglichen Durchmesser genau an der ersten bzw. der zweiten Messposition befinden, führt eine verschleißbedingte Abnahme des Durchmessers dazu, dass, wenn sich beispielsweise der eine Wälzkörper genau an der ersten Messposition befindet, der andere Wälzkörper nicht mehr exakt an der zweiten Messposition befindet, sondern an einer geringfügig davon abweichenden Position. Das hat zur Folge, dass beispielsweise die an der ersten Messposition gemessenen Flussdichten für beide Verschleißzustände gleich sind, aber die an der zweiten Messposition gemessenen Flussdichten sich verschleißabhängig voneinander unterscheiden. Dieser Unterschied kann von der Auswerteeinheit dazu verwendet werden, auf der Grundlage dieser unterschiedlichen Flussdichten bzw. Flussdichtenverhältnisse die Durchmesser bzw. die verschleißbedingten Änderungen der Durchmesser der Wälzkörper zu ermitteln.

Die Auswerteeinheit kann dazu eingerichtet sein, auf der Grundlage der ermittelten Durchmesser bzw. Durchmesseränderungen ein Verschleißdetektionssignal auszugeben, wobei dieses Verschleißdetektionssignal ein Maß für die Durchmesserabnahme verkörpern kann oder das Unterschreiten eines Schwellenwerts für den Durchmesser repräsentieren kann.

Gemäß einer vorteilhaften Ausführungsform der Erfindung umfasst das Ermitteln des Durchmessers und/oder von Änderungen des Durchmessers der Wälzkörper das Ermitteln von Abständen der Schwerpunkte, insbesondere von Mittelwerten der Abstände über zumindest eine Teilmenge der Wälzkörper. Wie bereits vorstehend erläutert, werden also die Durchmesser der Wälzkörper nicht direkt ermittelt, sondern indirekt über das Ermitteln von Abständen der Schwerpunkte von unmittelbar benachbarten Wälzkörpern oder einer Reihe von drei oder auch mehr Wälzkörpern. Durch die Betrachtung von Mittelwerten der Abstände bei umlaufenden Wälzkörpern wird vermieden, dass aufgrund von Messtoleranzen fälschlicherweise für einzelne Wälzkörper ein vermeintlich hoher Verschleiß festgestellt wird.

Erfindungsgemäß ist die Auswerteeinrichtung zum Erfassen und Auswerten von zeitlichen Verläufen der von den Magnetfeldsensoren gemessenen Flussdichten eingerichtet. Wenn sich die Wälzkörper durch das Messmagnetfeld hindurchbewegen, ändern sich die jeweiligen gemessenen Flussdichten periodisch. Diese periodischen Verläufe der Flussdichten können erfasst, insbesondere gespeichert und ausgewertet werden.

Erfindungsgemäß umfasst der Vergleich der von den Magnetfeldsensoren gemessenen Flussdichten das Ermitteln einer Phasendifferenz zwischen den zeitlichen Verläufen der von den Magnetfeldsensoren gemessenen Flussdichten. Bei bewegten Wälzkörpern kann somit aus den periodischen zeitlichen Verläufen der Flussdichten eine Phasenverschiebung zwischen den zeitlichen Verläufen der vom ersten bzw. vom zweiten Magnetfeldsensor gemessenen Flussdichten ermittelt werden. Des Weiteren ist eine Amplitudenveränderung der Signalwerte feststellbar. Die Phasenverschiebung oder Phasendifferenz kann als Maß für den Verschleiß der Wälzkörper herangezogen werden, da die Phasenverschiebung den Durchmesser der Wälzkörper bzw. Änderungen der Phasenverschiebung Änderungen des Durchmessers der Wälzkörper repräsentieren. Insbesondere erfolgt durch das Bestimmen der zeitlichen Differenz bzw. der Phasendifferenz bereits eine Mitteilung über mehrere Wälzkörper. Gleichwohl kann alternativ oder zusätzlich eine Amplitudenveränderung als Verschleißmaß betrachtet werden.

Bei Bewegung der Wälzkörper vorbei an den Magnetfeldsensoren ergibt sich ein sinusförmiges periodisches Signal, dessen Frequenz zunächst von der Umlaufgeschwindigkeit abhängt. Tritt bei konstanter Umlaufgeschwindigkeit eine Verringerung der Wellenlänge des Signals bzw. Erhöhung der Frequenz des Signalverlaufs auf, so ist dies ein Maß für einen abnehmenden Durchmesser der Wälzkörper. Vorteilhaft kann eine Betrachtung der Phasendifferenz der Signalverläufe zweier in Umlaufrichtung U versetzter Magnetfeldsensoren ein Maß für den Verschleiß unabhängig von der Umlaufgeschwindigkeit darstellen. Denn eine Betrachtung der Phasendifferenz kann unabhängig von der Umlaufgeschwindigkeit, d.h. auch bei variierenden oder wechselnden Umlaufgeschwindigkeiten herangezogen werden, da es sich um eine Relativmessung handelt, die auf der differentiellen Abtastung der sinusförmigen Signalschwankung beruht, die von sich bewegenden Wälzkörper durch ein konstantes Magnetfeld verursacht wird.

Gemäß einer weiteren vorteilhaften Ausführungsform der Erfindung ist der Abstand der Messpositionen kleiner als der Nenndurchmesser der Wälzkörper, bevorzugt kleiner einem halben Nenndurchmesser, insbesondere gleich einem viertel Nenndurchmesser. Unter dem Nenndurchmesser der Wälzkörper wird im vorliegenden Kontext der ursprüngliche Durchmesser ohne abriebs- oder verformungsbedingte Verminderungen verstanden. Durch eine Abstimmung des Abstands der Messpositionen an den Nenndurchmesser der Wälzkörper können Durchmesseränderungen besonders präzise erfasst werden. Insbesondere wenn der Abstand der Messpositionen ungefähr gleich dem halben oder gleich dem Viertel Nenndurchmesser ist bzw. nicht mehr als 10 %, maximal 20 % davon abweicht, lassen sich Durchmesseränderungen besonders präzise ermitteln. Wenn sich beispielsweise der Schwerpunkt eines Wälzkörpers gerade bei der ersten Messposition befindet, befindet sich an der zweiten Messposition gerade eine Lücke bzw. ein Zwischenraum zwischen diesem Wälzkörper und dem benachbarten Wälzkörper. Dies führt dazu, dass der Unterschied zwischen den jeweiligen gemessenen Flussdichten maximal wird. Betrachtet man die zeitlichen Verläufe der an der ersten bzw. der zweiten Messposition gemessenen Flussdichten, zeigt sich hier eine Phasenverschiebung von 90° zwischen den beiden Signalverläufen. Mit zunehmendem Verschleiß der Wälzkörper verändert sich diese Phasenverschiebung.

In einer weiteren vorteilhaften Ausführungsform können der erste Magnetfeldsensor und der zweite Magnetfeldsensor jeweils eine Messbrücke mit zwei Halbbrücken umfassen. Dabei können die Halbbrücken der beiden Magnetfeldsensoren in Umlaufrichtung U verschachtelt und versetzt zueinander angeordnet sein. Bevorzugt können die magnetoresistiven Brückenwiderstände jeder Halbbrücke in Umlaufrichtung U beabstandet sind, d.h. die Längserstreckung der Halbbrücken ist in Umlaufrichtung U der Wälzkörper ausgerichtet. Jede Halbbrücke umfasst zwei einzelne Brückenwiderstände, wobei zumindest eine, insbesondere beide Brückenwiderstände magnetoresistive Eigenschaften aufweisen, und eine durch die Wälzkörper verursachte Veränderung des Magnetfelds - insbesondere Streufelder - messen können. Durch die axiale Längsorientierung der Brückenwiderstände in Umlaufrichtung U, wobei die beiden Brückenwiderstände jeder Halbbrücke axial in Umlaufrichtung U ausgerichtet sein können, überspannt jede Halbbrücke einen größeren Bereich des Nenndurchmessers des Wälzkörpers, wobei eine Durchmesserveränderung durch eine Signalveränderung der Messbrücke detektierbar ist. Werden weiterhin die Brückenwiderstände beider Magnetfeldsensoren in Umlaufrichtung U verschachtelt und räumlich versetzt zueinander angeordnet, so erfassen beide Magnetfeldsensoren verschiedene Durchmesserbereiche des Wälzkörpers, wobei ein Vergleich einer Phasenänderung und/oder einer Amplitudenänderung der aus beiden Magnetfeldsensoren bestimmbaren Signale ein Maß für einen sich verändernden Durchmesser der sich bewegenden Wälzkörpern darstellt.

In einer vorteilhaften Weiterbildung einer der beiden vorgenannten Ausführungsformen kann der Abstand benachbarter Halbbrücken der beiden verschalteten Magnetfeldsensoren in etwa einem Viertel des Durchmessers eines Wälzkörpers entsprechen, wobei der Abstand zweier magnetoresistiver Brückenwiderstände jeder einzelnen Halbbrücken eines einzelnen Magnetfeldsensors in etwa einem halben Durchmessers eines Wälzkörpers entspricht. Sofern der Abstand von Halbbrücken der beiden Magnetfeldsensoren einem Viertel des Durchmessers eines Wälzkörpers entspricht, kann bei einem sinusförmigen Verlauf der sich bewegenden Wälzkörper in Umlaufrichtung jeweils ein Magnetfeldsensor z.B. das obere und untere Maximum des Signalverlaufs und der andere Magnetfeldsensor die beiden Bereich der größten Signalvariation im Bereich der Nulldurchgänge des Signalverlaufs, dass durch die Bewegung des Wälzkörpers verursacht wird, bestimmen. Eine Differenz der Signalverläufe, ggf. einer Norm der beiden Signalverläufe wie z.B. eine euklidische Norm ergibt einen überaus stabilen Phasenwert. Eine Veränderung des Phasenwertes, oder einer davon abgeleiteten Größe ist ein Indikator für einen abnehmenden Durchmesser des Wälzkörpers und kann mit geringem schaltungstechnischem Aufwand überwacht werden.

Gemäß einer weiteren vorteilhaften Ausführungsform der Erfindung ist der Magnet als Permanentmagnet, insbesondere als Dipolmagnet ausgebildet, dessen Magnetfeld die Messpositionen überdeckt. Insbesondere wird hierdurch gewährleistet, dass das Messmagnetfeld zumindest im Bereich der Messpositionen homogen ist und weitgehend dieselbe Flussdichte aufweist. Durch die Verwendung eines Permanentmagneten kann der Stromverbrauch der Verschleißüberwachungsvorrichtung niedrig gehalten werden. Anstelle eines einzigen Magneten können auch zwei oder mehr Magneten zum Einsatz gelangen. Ferner können anstelle von Permanentmagneten auch Elektromagneten verwendet werden.

Gemäß noch einer weiteren vorteilhaften Ausführungsform umfasst die Verschleißüberwachungsvorrichtung einen Führungskanal für die Wälzkörper, wobei die Magnetfeldsensoranordnung und der Magnet an einer Abtastwandung des Führungskanals angeordnet sind. Der Führungskanal kann derart ausgestaltet sein, dass hier eine für die magnetische Abtastung der Wälzkörper besonders vorteilhafte Montageposition für die Magnetfeldsensoranordnung und/oder den Magneten vorgesehen sein kann. Dies wird nachfolgend noch näher erläutert. Der Führungskanal kann insbesondere integraler Bestandteil der Verschleißüberwachungsvorrichtung sein. Vorzugsweise verläuft der Führungskanal linear, wobei jedoch auch ein gekrümmter Verlauf möglich ist.

Vorteilhafterweise verläuft eine Magnetfluss-Austrittsfläche des Magneten parallel zu der Abtastwandung. Es hat sich gezeigt, dass hierdurch eine besonders gute magnetische Abtastung der Wälzkörper möglich ist. Hierbei verlaufen die Feldlinien zumindest nahe der Austrittsfläche in der Regel senkrecht zu einer Bewegungsrichtung der Wälzkörper.

Grundsätzlich kann der Magnet aber auch so angeordnet sein, dass eine Magnetfluss-Austrittsfläche des Magneten senkrecht oder auch in anderer Richtung bezogen auf die Abtastwandung verläuft.

Es hat sich als vorteilhaft erwiesen, wenn die Flussdichte des Messmagnetfelds und/oder das Material und/oder die Dicke der Abtastwandung derart gewählt sind, dass von dem Messmagnetfeld erfasste Wälzkörper durch das Messmagnetfeld bevorzugt lageunabhängig an die Abtastwandung herangezogen werden, wobei sich insbesondere vom Messmagnetfeld erfasste Wälzkörper auch gegenseitig anziehen. Durch das Anziehen der Wälzkörper an die Abtastwandung wird gewährleistet, dass sich die Wälzkörper stets in einer definierten Relativposition befinden. Insbesondere wenn die Wälzkörper konstruktionsbedingt oder aufgrund von fortgeschrittenem Verschleiß ein Lateralspiel im Führungskanal aufweisen, wird vermieden, dass das Messergebnis durch eine ungeeignete Positionierung der Wälzkörper im Führungskanal verfälscht wird. So wäre denkbar, dass die Wälzkörper wechselweise lateral gegeneinander verschoben sind, was zumindest dann, wenn die Wälzkörper noch gegenseitig in Kontakt miteinander stehen, dazu führen würde, dass sich die Abstände der Schwerpunkte der Wälzkörper bezogen auf die durch die beiden Messpositionen definierte Messstrecke verringern.

Durch eine geeignete Ausgestaltung des Messmagnetfelds kann insbesondere auch gewährleistet werden, dass die Wälzkörper zumindest im Bereich der Magnetsensoranordnung aneinandergepresst werden, so dass keine Lücken zwischen zwei benachbarten Wälzkörpern entstehen, welche das Messergebnis verfälschen könnten. Um die gewünschte hohe Flussdichte zur Erzeugung der vorstehend beschriebenen Effekte zu erzielen, kann neben einer Auswahl eines ausreichend starken Magneten auch vorgesehen sein, dass der Führungskanal oder zumindest die Abtastwandung aus unmagnetischem Material besteht. Alternativ oder zusätzlich kann auch die Abtastwandung gedünnt werden, um den Abstand zwischen den Wälzkörpern und dem Magneten zu minimieren. Durch eine ausreichende Anziehung der Wälzkörper an die Abtastwandung kann insbesondere gewährleistet werden, dass die Wälzkörper auch entgegen der Schwerkraft an die Führungswandung angezogen werden, was eine lageunabhängige Verwendung der Verschleißüberwachungsvorrichtung ermöglicht.

Vorteilhafterweise umfasst die Magnetfeldsensoranordnung magnetoresistive Magnetfeldsensoren, insbesondere AMR-, CMR-, TMR- oder GMR-Magnetfeldsensoren. Diese auch als xMR-Magnetfeldsensoren bezeichneten Sensortypen zeichnen sich gegenüber Hall-Sensoren, die ebenfalls verwendet werden können, durch eine bis zu 50-mal höhere Sensitivität aus. Den genannten magnetoresistiven Sensoren liegt der anisotrope magnetoresistive Effekt (AMR-Effekt), der kolossale magnetoresistive Effekt (CMR-Effekt, von englisch "colossal magnetoresistance"), der magnetische Tunnelwiderstand (TMR-Effekt, von englisch "tunnel magnetoresistance") bzw. der Riesenmagnetowiderstand (GMR-Effekt von englisch "giant magnetoresistance") zugrunde. Diese Art von Magnetfeldsensoren sind richtungsselektiv, d.h. sie können Betrag und Richtung einer Magnetfeldkomponente bestimmen, und eignen sich daher vorzüglich zur Magnetfeldwinkelbestimmung. Vorteilhafterweise kann jeder Magnetfeldsensor mehrere, insbesondere zwei oder vier magnetoresistive Widerstandselemente umfassen, welche in an sich bekannter Weise zu einer Wheatstone-Messbrücke, insbesondere einer Wheatstone-Halbbrücke oder einer Wheatstone-Vollbrücke, zusammengeschaltet sind. Hierfür können die magnetoresistiven Widerstandselemente auch in geeigneter Weise räumlich verteilt sein.

In der Regel kann die Verschleißüberwachung ausgehend von einem Neu- oder Kalibrierzustand durch Vergleich einer Veränderung eines Phasenwertes oder Amplitudenverhaltens beider Magnetfeldsensoren auf einen Verschleißzustand der Wälzkörper schließen. Hierdurch ist eine Relativüberwachung gegenüber einem Kalibrierzustand gegeben.

In der Regel hängen die Geschwindigkeit der linearen Bewegung oder des Gewindevortriebs und die Bewegungsgeschwindigkeit der Wälzkörper nicht unmittelbar voneinander ab. Typischerweise verläuft die Wälzkörperbewegung geringer als die lineare Verfahrbewegung bzw. der Gewindevortrieb, dennoch kann in besonderen Anwendungsfällen ein direkter Zusammenhang zwischen Vortriebsbewegung und Bewegung der Wälzkörper abgeleitet werden. In diesen Fällen kann vorteilhafterweise die Verschleißüberwachungsvorrichtung einen Drehzahlsensor umfassten, der eine Drehzahl des Kugelgewindetriebs bestimmt, oder ein Positions- oder Geschwindigkeitssensor umfassen, der eine Verfahrgeschwindigkeit des Linearlagers bestimmt, wobei die Auswerteeinheit zur Ermittlung des Durchmessers und/oder Änderungen der Durchmesser der Wälzkörper geometrische Parameter des Kugelgewindetriebs bzw. des Linearlagers und Drehzahl bzw. Verfahrgeschwindigkeit einbezieht. Geometrische Parameter können eine Steigung des Gewindetriebs, Durchmesser des Gewindetriebs und Länge eines Bypasses des Kugelgewindetriebs sein, aber auch Verhältnis von Wälzkörperbahnlänge zur Längsabmessung eines Linearlagers oder ähnliches. Auf Basis von Sensordaten, die auch einen Antriebsstrom eines Antriebsmotors oder Drehmoment des Kugelgetriebes oder Beschleunigungskraft des Linearlagers umfassen können, kann eine verbesserte Absolutüberwachung des Verschleißzustandes ermöglicht werden. Die Sensordaten können die Bewegungsgeschwindigkeit der Wälzkörper bestimmen. Hiermit ist ein Rückschluss von z.B. Drehzahl oder Verfahrgeschwindigkeit zur auftretenden Signalfrequenz möglich, so dass auf Basis eines Messsignals bereits eines einzelnen Magnetfeldsensors der Magnetfeldsensoranordnung und unter Berücksichtigung des Bewegungsverlaufs des Gewindetriebs bzw. des Linearlagers in Umlaufrichtung U auf den Durchmesser des Wälzkörpers geschlossen werden kann. Somit kann alternativ oder zusätzlich zu einer Relativüberwachung eine Absolutüberwachung durch Berücksichtigung weiterer geometrischer Parameter und Sensordaten ermöglicht werden. Auch kann sehr einfach eine Beschädigung der Führungswände erkannt werden, die die Bewegung der Wälzkörper abbremsen würde.

Die Erfindung betrifft ferner einen Kugelgewindetrieb mit einer Verschleißüberwachungsvorrichtung nach einer der vorhergehenden Ausgestaltungen, wobei die Verschleißüberwachungsvorrichtung an einem Kugelrücklaufkanal des Kugelgewindetriebs angeordnet ist. Ein Kugelgewindetrieb ist ein Schraubgetriebe mit zwischen Schraube und Mutter eingefügten Kugeln. Beide Teile haben je eine schraubenförmige Rille, die gemeinsam eine mit Kugeln gefüllte schraubenförmige Röhre bilden. Beim Drehen zwischen Schraube und Mutter rollen die Kugeln in ihrer Röhre und bewegen sich zum vorderen Mutterende hin. Dort werden sie aufgenommen und durch eine meist parallel zur Gewindeachse verlaufende Röhre, die auch als Kugelrücklaufkanal bezeichnet wird, zum hinteren Mutterende geführt und in die schraubenförmige Röhre wieder eingeleitet. Kugelgewindetriebe werden insbesondere bei Werkzeugmaschinen eingesetzt, so dass eine besonders hohe Präzision mit möglichst geringem Lagerspiel angestrebt wird. Insbesondere ein Axialspiel, welches insbesondere bei Hochgeschwindigkeitsantrieben bei einer Richtungsumkehr zu unerwünschten Latenzzeiten führt, soll möglichst gering gehalten werden. Da die Wälzkörper in der Regel in einem geschlossenen Kreislauf zirkulieren, gestaltet sich eine direkte Verschleißüberwachung schwierig. Hier hat sich die Verwendung einer erfindungsgemäßen Verschleißüberwachungsvorrichtung als besonders vorteilhaft erwiesen.

### ZEICHNUNGEN

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigt:
- **Fig. 1**: eine schematische Darstellung einer an einem Führungskanal angeordneten Verschleißüberwachungsvorrichtung gemäß einem Ausführungsbeispiel mit verschiedenen Magnetpolausrichtungen;
- **Fig. 2**: verschiedene Detailansichten eines Details der Verschleißüberwachungsvorrichtung von Fig. 1, teils in Abwandlung;
- **Fig. 3**: schematische Ansichten der Verschleißüberwachungsvorrichtung von Fig. 1, einschließlich zugehöriger Signalverläufe für gemessene magnetische Flussdichten, jeweils für Wälzkörper mit unterschiedlichem Durchmesser; und
- **Fig. 4**: ein schematisches Schaltbild einer Messbrückenkonfiguration einer Magnetfeldsensoranordnung gemäß eines Ausführungsbeispiels;
- **Fig. 5**: ein schematisches Schaltbild einer Messbrückenkonfiguration einer Magnetfeldsensoranordnung gemäß eines weiteren Ausführungsbeispiels;

Im Folgenden werden für gleiche oder gleichartige Elemente gleiche Bezugszeichen verwendet.

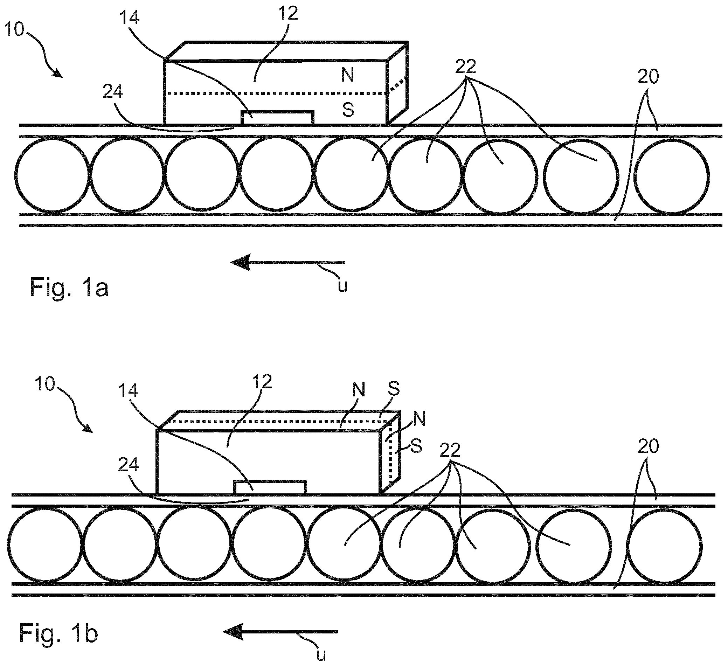

Fig. 1 zeigt in zwei Teilbildern Fig. 1a und Fig. 1b eine Verschleißüberwachungsvorrichtung 10 gemäß einem Ausführungsbeispiel, welche an einem Führungskanal 20 eines Maschinenelements, beispielsweise einem Rücklaufkanal eines Kugelgewindetriebs oder eines Linearlagers, angeordnet ist. Im Führungskanal 20 ist eine Vielzahl von Wälzkörpern 22 aufgenommen, welche sich in einer Umlaufrichtung U bewegen. Der Querschnitt des Führungskanals 20 ist nur geringfügig größer als der Durchmesser der Wälzkörper 22, so dass sich eine Art Zwangsführung für die Wälzkörper 22 ergibt. Die Wälzkörper 22 sind beispielsweise Kugeln, können aber in Abhängigkeit von der Bauart des Maschinenelements auch durch beliebige andere Rotationskörper gebildet sein.

Die Verschleißüberwachungsvorrichtung 10 umfasst einen als Dipol ausgebildeten Magneten 12, welcher an einer Außenwandung des Führungskanals 20 angeordnet ist. Die magnetische Polarität des Magneten 12 ist durch die Vorzeichen "N" für Nordpol und "S" für Südpolangegeben, wobei selbstverständlich auch eine umgekehrte Polarität gewählt werden kann.

In der Fig. 1a ist der Magnet 12 derart an dem Führungskanal 20 angeordnet, dass die aus einer Magnetfeld-Austrittsfläche des Magneten 12 aus- oder eintretenden Feldlinien (nicht dargestellt) senkrecht zur Umlaufrichtung U aus dem Magneten 12 austreten, wobei die Feldlinien am Magnetpol senkrecht auf der Abtastwandung 24 des Führungskanals 20 stehen. Somit werden die Magnetfeldlinien in Blattebene durch die Wälzkörp22 geführt.

In der Fig. 1b ist die Polausrichtung des Magneten 12 derart gewählt, dass die Feldlinien wiederum senkrecht zur Umlaufrichtung U aus den Polflächen des Magneten 12 austreten, wobei sie an den Polflächen tangential zur Längserstreckung der Abtastwandung 24 des Führungskanals 20 ausgerichtet sind. Insofern durchdringen die Magnetfeldlinien in Blattrichtung die Wälzkörper 22.

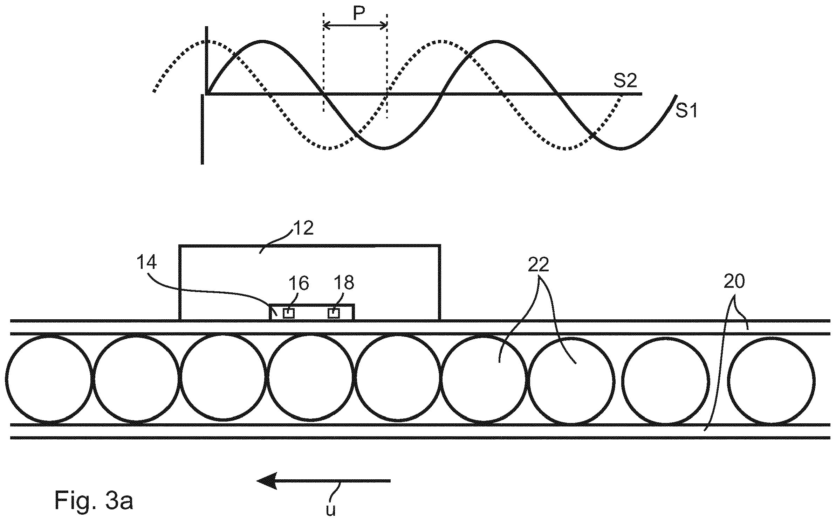

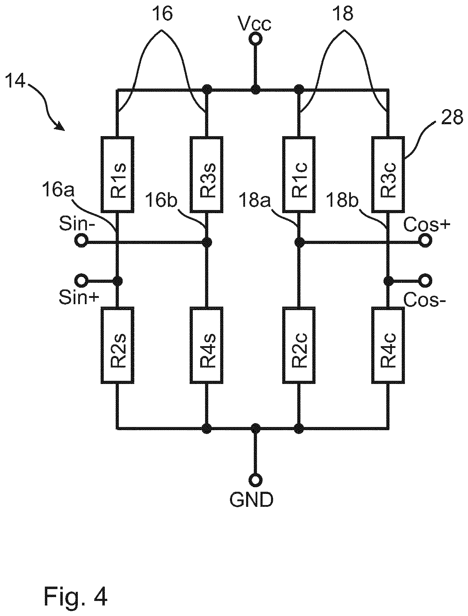

Die Magnetfeldsensoranordnung 14 ist direkt mit dem Magneten 12 verbunden, so dass diese unmittelbar benachbart angeordnet sind, und diese sind auf der Oberfläche des Führungskanals 20 aufgesetzt. Dabei kann vorteilhafterweise zwischen der Magnetfeldsensoranordnung 14 und dem Magneten 12 ein Träger-PCB angeordnet sein. Die Magnetfeldsensoranordnung 14 kann einen ersten Magnetfeldsensor 16 und einen hiervon in der Umlaufrichtung U beabstandeten zweiten Magnetfeldsensor 18 umfassen - beispielhaft in den Figs. 3a, 3b und 4, 5 dargestellt. Der Abstand der Magnetfeldsensoren 16, 18 beträgt ungefähr die Hälfte des Nenndurchmessers der Wälzkörper 22. Die Magnetfeldsensoren 16, 18 können ein oder mehrere magnetoresistive Widerstandselemente oder auch Hall-Sensoren umfassen. Die Anordnung und Beschaltung derartiger Widerstandselemente ist grundsätzlich bekannt und wird in Bezug auf Fig. 4 näher erläutert.

Der Bereich einer Wandung des Führungskanals 20, der von dem Magneten 12 bzw. der Magnetfeldsensoranordnung 14 überdeckt wird, wird im Folgenden auch als Abtastwandung 24 bezeichnet.

Die umlaufenden, ferromagnetischen Wälzkörper 22 werden in das von dem Magneten 12 erzeugte Messmagnetfeld hineingezogen und, auch entgegen der Schwerkraft, an die Abtastwandung 24 herangezogen oder gedrückt. Der übliche torusförmige Verlauf der magnetischen Feldlinien eines Dipolmagnets bewirkt zudem, dass die Wälzkörper 22 im Bereich des Messmagnetfelds zugleich aneinandergedrückt werden, so dass die Wälzkörper 22, genauer die Schwerpunkte der Wälzkörper 22, auf einer Geraden verlaufend und ohne Lücken zwischen benachbarten Wälzkörpern 22 an der Magnetfeldsensoranordnung vorbeigeführt werden. Aufgrund ihrer ferromagnetischen Eigenschaften verändern die Wälzkörper 22 lokal die magnetische Flussdichte, wobei die Flussdichte bzw. deren Änderungen von den Magnetfeldsensoren 16, 18 erfasst werden.

Die Verschleißüberwachungsvorrichtung 10 umfasst ferner eine Auswerteeinheit (nicht dargestellt), welche mit der Magnetfeldsensoranordnung 14 verbunden ist und zum Erfassen und Auswerten der von den Magnetfeldsensoren 16, 18 gemessenen magnetischen Flussdichten vorgesehen ist. Die Auswerteeinheit ist dazu eingerichtet, auf der Grundlage eines Vergleichs der von den Magnetfeldsensoren 16, 18 gemessenen Flussdichten die Durchmesser bzw. Änderungen der Durchmesser der Wälzkörper zu ermitteln. Dies wird nachfolgend noch näher erläutert.

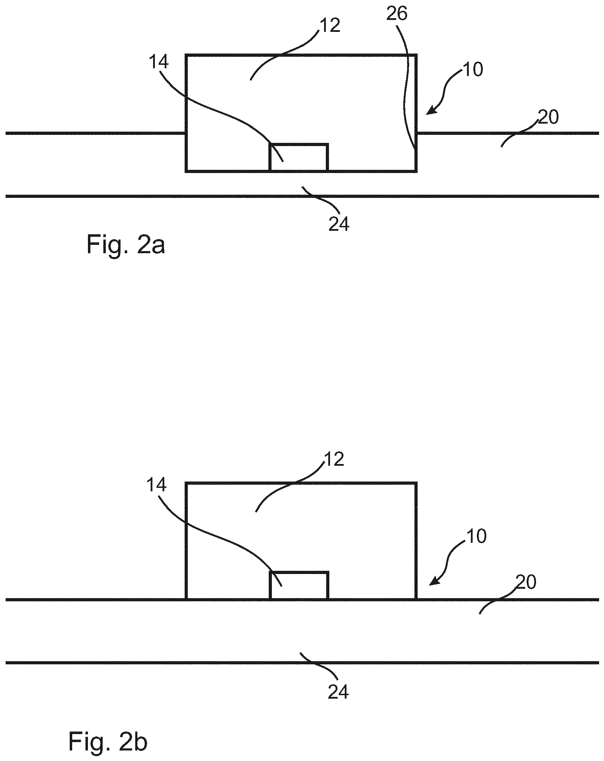

Fig. 2 zeigt verschiedene Detailansichten einer an einem Führungskanal 20 angeordneten Verschleißüberwachungsvorrichtung 10 gemäß verschiedener Abwandlungen.

Bei der Anordnung gemäß Fig. 2a kann der Führungskanal 20 aus einem ferromagnetischen Material bestehen. Um zu gewährleisten, dass das Messmagnetfeld eine ausreichende Stärke aufweist, ist die Wandstärke des Führungskanals 20 im Bereich der Abtastwandung 24 verringert. Bevorzugt kann die Wandstärke auf 0,1 bis 0,2mm verdünnt sein, um eine genügende Magnetfelddurchdringung zu ermöglichen, wobei das Magnetfeld vorzugsweise die Wälzkörper, insb. Wälzkugeln eng benachbart magnetisch anziehen und führen kann, so dass diese dicht benachbart an der Magnetfeldsensoranordnung 14 vorbeigeführt werden können. Hierfür ist an einer Außenseite des Führungskanals 20 eine Ausnehmung 26 in die Wandung eingebracht. In der Ausnehmung 26 kann die Magnetfeldsensoranordnung 14 näher an den Wälzkörpern 22 herangeführt werden, so dass die Stärke des Magneten 12 ggf. reduziert werden kann.

Die Abwandlung der Anordnung gemäß Fig. 2b entspricht im Wesentlichen dem Ausführungsbeispiel von Fig. 1, wobei hier abweichende Dimensionen der Verschleißüberwachungsvorrichtung 10 keine Bedeutung haben. Hier weist die Abtastwandung 24 die gleiche Stärke auf, wie die Wandung des Führungskanals 20 in den anderen Bereichen. Um eine ausreichende Durchdringung der Abtastwandung 24 durch das Messmagnetfeld zu erreichen, besteht das Material des Führungskanals 20 zweckmäßigerweise aus einem unmagnetischen Material.

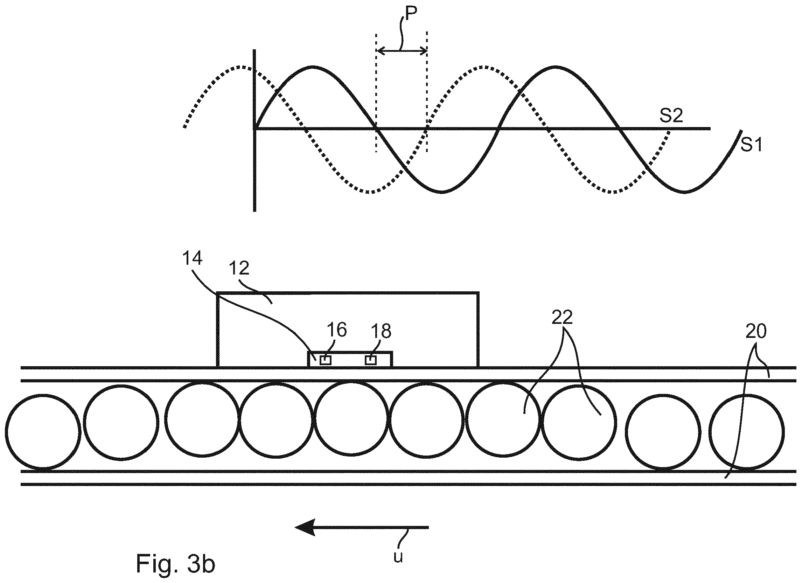

Mit Bezug auf Fig. 3 wird nachfolgend die Funktionsweise der Verschleißüberwachungsvorrichtung 10 näher erläutert.

In den Teilfiguren Fig. 3a und Fig. 3b der Fig. 3 ist jeweils die Verschleißüberwachungsvorrichtung 10 sowie der Führungskanal 20 einschließlich der darin umlaufenden Wälzkörper 22 dargestellt. Während die Wälzkörper 22 in Fig. 3a neuwertig sind und daher ihren Nenndurchmesser aufweisen, sind die Wälzkörper 22 von Fig. 3b bereits einem gewissen Verschleiß unterlegen, was zur Verringerung ihres Durchmessers geführt hat. Es ist zu beachten, dass die Größenverhältnisse nicht maßstäblich gewählt sind.

Im oberen Teil von Fig. 3a und 3a sind jeweils zeitliche Verläufe der von den Magnetfeldsensoren 16, 18 gemessenen Flussdichten dargestellt. Die mit einer durchgezogenen Linie dargestellte Messkurve S1 repräsentiert jeweils den von dem ersten Magnetfeldsensor 16 ermittelten Flussdichteverlauf, während die gestrichelt dargestellte Messkurve S2 den von dem zweiten Magnetfeldsensor 18 ermittelten Flussdichteverlauf repräsentiert.

Aufgrund der Beabstandung der Magnetfeldsensoren 16, 18 in Umlaufrichtung U sind die Messkurven S1, S2 gegeneinander phasenverschoben. Eine daraus resultierende Phasendifferenz P ist in Fig. 3 entsprechend verdeutlicht.

Wie in Fig. 3a gut zu erkennen ist, ist der Abstand der Magnetfeldsensoren 16, 18 derart gewählt, dass die Messkuren S1, S2 für Wälzkörper 22 mit Nenndurchmesser gerade um 90° zueinander phasenverschoben sind. Hierfür wird angenommen, dass die Messkurven S1, S2 einen annähernd sinus- bzw. cosinusförmigen Verlauf aufweisen.

Ein Vergleich von Fig. 3a mit Fig. 3b zeigt, dass sich mit zunehmendem Verschleiß der Wälzkörper 22, d. h. mit abnehmendem Durchmesser, die Messkurven S1, S2 relativ zueinander verschieben, was bei der gewählten Definition der Phasendifferenz P zu einer Verringerung derselben führt. Somit stellt die Phasendifferenz P ein Maß für den Verschleiß, d. h. für die Änderung des Durchmessers der Wälzkörper 22, dar.

Die Auswertung der von der Magnetfeldsensoranordnung 14 erzeugten Signale erfolgt in geeigneter Weise in der Auswerteeinheit. Insbesondere kann eine zeitliche Mittelung der gemessenen Phasendifferenz P erfolgen. Die Auswertung kann insbesondere richtungsunabhängig erfolgen, so dass eine Ermittlung der Wälzkörperdurchmesser bzw. deren Änderung auch für entgegengesetzt der Umlaufrichtung U umlaufende Wälzkörper 22 und sogar für stillstehende Wälzkörper 22 durchgeführt werden kann, wobei im letzteren Fall aufgrund der fehlenden Möglichkeit der Mittelung unter Umständen ein etwas höherer Messfehler in Kauf genommen werden muss.

In der Fig. 4 ist schematisch eine Messbrückenkonfiguration einer Magnetfeldsensoranordnung 14 dargestellt. Die Messbrückenkonfiguration 14 setzt sich aus zwei Messbrücken zusammen, die jeweils einen ersten Magnetfeldsensor 16 für eine Sinuskomponente und einen zweiten Magnetfeldsensor 18 für eine Cosinus Komponente definieren. Jede Messbrücke ist wiederum aus zwei Halbbrücken 16a, 16b bzw. 18a, 18b mit Widerstandspaaren R1-R2 und R3-R4 aus magnetoresistiven Brückenwiderständen 28 zusammengesetzt, die an einer Versorgungsspannung zwischen einem Versorgungsspannungspotential VCC und dem Rückleitungspotential GND angeschlossen sind. Zwischen jedem Widerstandspaar R1-R2 und R3-R4 jeder Halbbrücke 16a, 16b bzw. 18a, 18b kann über einen Mittenabgriff ein Teil des Sensorsignals der Sinuskomponente SIN+, SIN- bzw. der Cosinus Komponente COS+, COS- abgenommen werden. Die Spannungsdifferenz zwischen den beiden Abgriffen SIN+ & SIN- bzw. COS+ & COS- entspricht einem Sensorsignal eines Magnetfeldsensors 16, 18. Sofern die Magnetfeldsensoren 16, 18 um jeweils ein Viertel eines Wälzkörper-Nenndurchmessers beabstandet sind, würde eine Differenz der beiden Sensorsignale konstant bleiben, sofern der Durchmesser der Wälzkörper sich nicht ändern würde. Bei einem Verschleiß würde sich allerdings der Signaldifferenz verändern, wobei dies ein Maß der Durchmesserveränderung darstellt.

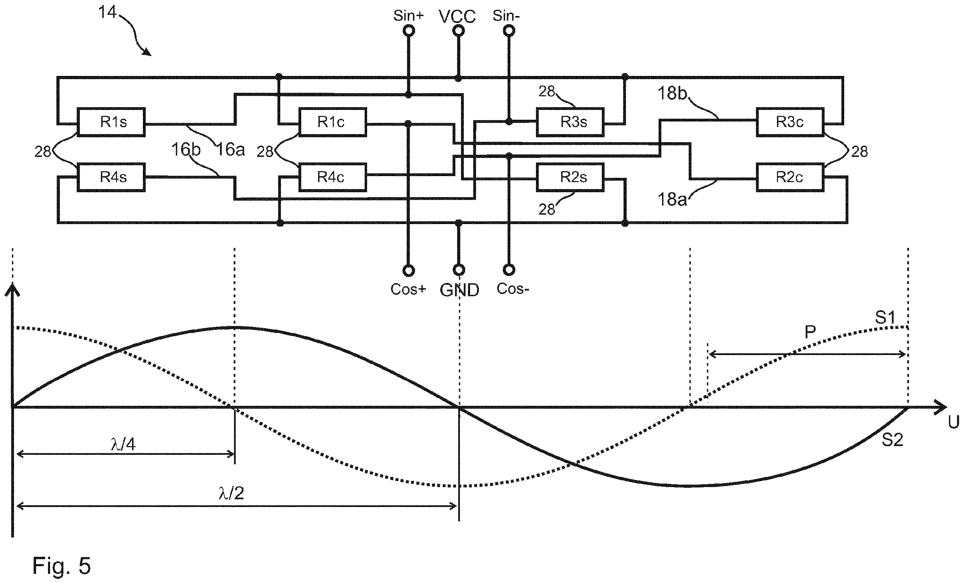

In vorgenannter Fig. 4 ist eine mögliche Schaltungskonfiguration der Magnetfeldsensoranordnung 14 dargestellt. Eine vorteilhafte räumliche Lage der sich aus zwei Messbrücken zusammengesetzten Magnetfeldsensoren 16, 18 bezogen auf eine Umlaufrichtung U der Wälzkörper ist in Fig. 5 dargestellt. Fig. 5 zeigt sowohl die räumliche Anordnung der einzelnen magnetoresistiven Brückenwiderstände 28 jedes Magnetfeldsensors 16, 18, als auch eine mögliche Verdrahtung der beiden Messbrücken. Jeweils zwei Halbbrücken 16a, 18a und 16b, 18b des ersten und zweiten Magnetfeldsensors 16, 18 sind in Umlaufrichtung U versetzt und ineinander verschachtelt angeordnet und weisen einen Abstand der Halbbrücken 16a zu 18a sowie 16b zu 18b von λ/4 auf, wobei λ vorteilhafterweise gerade einem Nenndurchmesser eines Wälzkörpers entspricht. Dabei sind die einzelnen Brückenwiderstände 28 jeder Halbbrücke 16a, 16b, 18a, 18b jedes Magnetfeldsensors 16, 18 um λ/2 in Umlaufrichtung U beabstandet.

Verlaufen die Wälzkörper 22 in Bewegungsrichtung U durch ein Messmagnetfeld eines Magneten 12, so verändert sich das von der Magnetsensoranordnung 14 gemessene Magnetfeld sinusförmig in Abhängigkeit der Bewegungsgeschwindigkeit und Größe der Wälzkörper 22. Vorteilhafterweise weisen die Wälzkörper 22 einen Durchmesser auf, der im Wesentlichen einem Abstand λ entspricht, so ergibt sich eine maximale und stabile Sensorwertdifferenz zwischen den Messwerten des ersten und zweiten Magnetfeldsensors 16, 18, da der erste Magnetfeldsensor gerade ein Maximalwert messen kann, während der andere Magnetfeldsensor einen Nulldurchgang messen kann.

So kann beispielsweise der Durchmesser eines Wälzkörpers einen Nenndurchmesser 3mm aufweisen, wobei die zugehörigen Brückenwiderstände 28 jeder Halbbrücke 16a, 16b oder 18a, 18b eines Magnetfeldsensors 16 oder 18 1500µm voneinander beabstandet sind, und die Halbbrücken 16a, 18a und 16b, 18b der beiden Magnetfeldsensoren16, 18 einen Abstand von 750µm aufweisen. Natürlich lassen sich die Größen skalieren auf die entsprechende Größe eines Wälzkörpers 22, auch können weitere Halbbrücken bzw. mehrere Magnetfeldsensoren vorgesehen sein, um einen größeren Bereich sensorisch zu überwachen. Auf Basis eines Phasenvergleichs der Messwerte SIN+/- gegenüber COS+/- der beiden Magnetfeldsensoren 16, 18 kann eine Phasendifferenz P beim Bewegen der Wälzkörper 22 ermittelt und eine Veränderung dieser Phasendifferenz als Verschleißmaß herangezogen werden. Beispielsweise kann im Rahmen eines Einlernvorgangs mit neuen, d. h. ihren Nenndurchmesser aufweisenden Wälzkörpern 22, eine Kalibrierung erfolgen. Die Auswerteeinheit kann beispielsweise eine Verschleißanzeige aufweisen, die kontinuierlich den aktuell ermittelten Durchmesser und/oder eine Abweichung vom kalibrierten Nenndurchmesser anzeigt.

Alternativ oder zusätzlich kann auch eine Schwellenwerterkennung vorgesehen sein, die ein geeignetes optisches, akustisches oder sonstiges Warnsignal ausgibt, wenn der aktuell ermittelte Durchmesser der Wälzkörper 22 einen vorgegebenen Schwellenwert unterschreitet.

### Bezugszeichenliste

- 10: Verschleißüberwachungsvorrichtung
- 12: Magnet
- 14: Magnetfeldsensoranordnung
- 16: erster Magnetfeldsensor
- 16a, 16b: Halbbrücken des ersten Magnetfeldsensors
- 18: zweiter Magnetfeldsensor
- 18a, 18b: Halbbrücken des zweiten Magnetfeldsensors
- 20: Führungskanal
- 22: Wälzkörper
- 24: Abtastwandung
- 26: Ausnehmung
- 28: magnetoresistiver Brückenwiderstand
- P: Phasendifferenz
- S1,S2: Messkurve
- U: Umlaufrichtung

## Patentansprüche

1. Verschleißüberwachungsvorrichtung (10) für ein Maschinenelement, welches einen Umlauf von ferromagnetischen Wälzkörpern (22) aufweist, insbesondere für einen Kugelgewindetrieb oder ein Linearlager, zur Verschleißüberwachung der Wälzkörper (22), mit zumindest einem Magneten (12) zum Erzeugen eines Messmagnetfelds, mit einer Magnetfeldsensoranordnung (14) zum Messen einer Flussdichte des Messmagnetfelds, wobei die Magnetfeldsensoranordnung (14) zumindest einen ersten Magnetfeldsensor (16) zum Messen der Flussdichte an einer ersten Messposition und einen zweiten Magnetfeldsensor (18) zum Messen der Flussdichte an einer zweiten, von der ersten Messposition beabstandeten Messposition aufweist, wobei die Messpositionen derart gewählt sind, dass während des Betriebs des Maschinenelements in einer Umlaufrichtung U umlaufende Wälzkörper (22) die Messpositionen dicht aneinander anliegend passieren und eine hierbei verursachte Änderung des Messmagnetfelds an einer der Messpositionen von dem jeweiligen Magnetfeldsensor (16, 18) detektierbar ist, und mit einer mit der Magnetfeldsensoranordnung (14) verbundenen Auswerteeinheit zum Erfassen und Auswerten der von den Magnetfeldsensoren (16, 18) gemessenen Flussdichten, wobei die Auswerteeinheit dazu eingerichtet ist, auf der Grundlage eines Vergleichs der von den Magnetfeldsensoren (16, 18) gemessenen Flussdichten Durchmesser und/oder Änderungen der Durchmesser der Wälzkörper (22) zu ermitteln, **dadurch gekennzeichnet, dass** die Auswerteeinrichtung zum Erfassen und Auswerten von periodischen zeitlichen Verläufen der von den Magnetfeldsensoren (16, 18) gemessenen Flussdichten eingerichtet ist, und dass der Vergleich der von den Magnetfeldsensoren (16, 18) gemessenen Flussdichten das Ermitteln einer Phasendifferenz zwischen den periodischen zeitlichen Verläufen der von den Magnetfeldsensoren (16, 18) gemessenen Flussdichten umfasst.

2. Verschleißüberwachungsvorrichtung (10) nach Anspruch 1, **dadurch gekennzeichnet, dass** das Ermitteln von Änderungen des Durchmessers der Wälzkörper (22) das Ermitteln von Abständen der Schwerpunkte, insbesondere von Mittelwerten der Abstände über zumindest eine Teilmenge der Wälzkörper (22), umfasst.

3. Verschleißüberwachungsvorrichtung (10) nach einem der vorhergehenden Ansprüche, **dadurch gekennzeichnet, dass** der Abstand der Messpositionen kleiner als der Nenndurchmesser der Wälzkörper (22) ist, bevorzugt kleiner einem halben Nenndurchmesser ist, insbesondere gleich einem Viertel Nenndurchmesser ist.

4. Verschleißüberwachungsvorrichtung (10) nach einem der vorhergehenden Ansprüche, **dadurch gekennzeichnet, dass** der erste Magnetfeldsensor (16) und der zweite Magnetfeldsensor (18) jeweils eine Messbrücke mit zwei Halbbrücken (16a, 16b, 18a, 18b) umfasst, wobei die Halbbrücken (16a, 16b, 18a, 18b) der beiden Magnetfeldsensoren (16, 18) in Umlaufrichtung U verschachtelt und versetzt zueinander angeordnet sind, und bevorzugt die magnetoresistiven Brückenwiderstände (26) jeder Halbbrücke (16a, 16b, 18a, 18b) in Umlaufrichtung U beabstandet sind.

5. Verschleißüberwachungsvorrichtung (10) nach Anspruch 3 und 4, **dadurch gekennzeichnet, dass** der Abstand benachbarter Halbbrücken (16a, 18a, 16b, 18b) in etwa einem Viertel des Durchmessers eines Wälzkörpers (22) entspricht, wobei der Abstand zweier magnetoresistiver Brückenwiderstände (28) jeder Halbbrücke (16a,16b, 18a,18b) eines Magnetfeldsensors (16, 18) in etwa einem halben Durchmessers eines Wälzkörpers (22) entspricht.

6. Verschleißüberwachungsvorrichtung (10) nach einem der vorhergehenden Ansprüche, **dadurch gekennzeichnet, dass** der Magnet (12) als Permanentmagnet, insbesondere als Dipolmagnet, ausgebildet ist, dessen Magnetfeld die Messpositionen überdeckt.

7. Verschleißüberwachungsvorrichtung (10) nach einem der vorhergehenden Ansprüche, **dadurch gekennzeichnet, dass** die Verschleißüberwachungsvorrichtung (10) einen Führungskanal (20) für die Wälzkörper (22) umfasst, wobei die Magnetfeldsensoranordnung (14) und der Magnet (12) an einer Abtastwandung (24) des Führungskanals (20) angeordnet sind.

8. Verschleißüberwachungsvorrichtung (10) nach Anspruch 7, **dadurch gekennzeichnet, dass** eine Magnetfluss-Austrittsfläche des Magneten (12) parallel oder senkrecht zu einer Längserstreckung der Abtastwandung (24) in Umlaufrichtung U verläuft.

9. Verschleißüberwachungsvorrichtung (10) nach Anspruch 7 oder 8, **dadurch gekennzeichnet, dass** die Flussdichte des Messmagnetfelds und/oder das Material und/oder die Dicke der Abtastwandung (24) derart gewählt sind, dass von dem Messmagnetfeld erfasste Wälzkörper (22) durch das Messmagnetfeld bevorzugt lageunabhängig an die Abtastwandung (24) herangezogen werden, wobei sich insbesondere vom Messmagnetfeld erfasste Wälzkörper (22) auch gegenseitig anziehen.

10. Verschleißüberwachungsvorrichtung (10) nach einem der vorhergehenden Ansprüche, **dadurch gekennzeichnet, dass** die Magnetfeldsensoranordnung (14) magnetoresistive Magnetfeldsensoren (16, 18), insbesondere AMR-, CMR-, TMR- oder GMR-Magnetfeldsensoren (16, 18), oder Hall-Sensoren, umfasst.

11. Verschleißüberwachungsvorrichtung (10) nach einem der vorhergehenden Ansprüche, **dadurch gekennzeichnet, dass** die Auswerteeinheit dazu eingerichtet ist, ein Warnsignal auszugeben, wenn der ermittelte Durchmesser der Wälzkörper (22) einen vorgegeben Schwellenwert unterschreitet.

12. Verschleißüberwachungsvorrichtung (10) nach einem der vorhergehenden Ansprüche, **dadurch gekennzeichnet, dass** ein Drehzahlsensor umfasst ist, der eine Drehzahl des Kugelgewindetriebs bestimmt, oder ein Positions- oder Geschwindigkeitssensor umfasst ist, der eine Verfahrgeschwindigkeit des Linearlagers bestimmt, wobei die Auswerteeinheit zur Ermittlung des Durchmessers und/oder Änderungen der Durchmesser der Wälzkörper (22) geometrische Parameter des Kugelgewindetriebs bzw. des Linearlagers und Drehzahl bzw. Verfahrgeschwindigkeit einbezieht.

13. Kugelgewindetrieb mit einer Verschleißüberwachungsvorrichtung (10) nach einem der vorhergehenden Ansprüche, wobei die Verschleißüberwachungsvorrichtung (10) an einem Kugelrücklaufkanal des Kugelgewindetriebs angeordnet ist.

## Claims

1. Wear monitoring device (10) for a machine element which has a succession of ferromagnetic rolling elements (22), in particular for a ball screw or a linear bearing, for wear monitoring of the rolling elements (22), with at least one magnet (12) for generating a measuring magnetic field, with a magnetic field sensor arrangement (14) for measuring a flux density of the measuring magnetic field, the magnetic field sensor arrangement (14) having at least one first magnetic field sensor (16) for measuring the flux density at a first measuring position and a second magnetic field sensor (18) for measuring the flux density at a second measuring position at a distance from the first measuring position, the measuring positions being selected such that during operation of the machine element in a circulation direction U circulating rolling elements (22) pass the measuring positions in close contact with one another and a change in the measuring magnetic field caused thereby is detectable at one of the measuring positions by the respective magnetic field sensor (16, 18), and with an evaluation unit connected to the magnetic field sensor arrangement (14) for recording and evaluating the flux densities measured by the magnetic field sensors (16, 18), the evaluation unit being configured, on the basis of a comparison of the flux densities measured by the magnetic field sensors (16, 18), to determine diameters and/or changes in the diameters of the rolling elements (22), **characterized in that** the evaluation unit is configured for recording and evaluating periodic time paths of the flux densities measured by the magnetic field sensors (16, 18), and that the comparison of the flux densities measured by the magnetic field sensors (16, 18) comprises the determining of a phase difference between the periodic time paths of the flux densities measured by the magnetic field sensors (16, 18).

2. Wear monitoring device (10) according to claim 1, **characterized in that** the determining of changes in the diameter of the rolling elements (22) comprises the determining of distances between centres of gravity, in particular of mean values of the distances over at least one subset of the rolling elements (22).

3. Wear monitoring device (10) according to one of the previous claims, **characterized in that** the distance between the measuring positions is smaller than the nominal diameter of the rolling elements (22), preferably smaller than half the nominal diameter, in particular equal to a quarter of the nominal diameter.

4. Wear monitoring device (10) according to one of the previous claims, **characterized in that** the first magnetic field sensor (16) and the second magnetic field sensor (18) each comprise a measuring bridge with two half bridges (16a, 16b, 18a, 18b), said half bridges (16a, 16b, 18a, 18b) of the two magnetic field sensors (16, 18) being arranged in the circulation direction U nested and offset relative to one another and the magnetoresistive bridge resistors (26) of each half bridge (16a, 16b, 18a, 18b) being preferably at a distance in the circulation direction U.

5. Wear monitoring device (10) according to claim 3 and 4, **characterized in that** the distance between adjacent half bridges (16a, 18a, 16b, 18b) corresponds to approximately a quarter of the diameter of a rolling element (22), the distance between two magnetoresistive bridge resistors (28) of each half bridge (16a, 16b, 18a, 18b) of a magnetic field sensor (16, 18) corresponding to approximately half the diameter of a rolling element (22).

6. Wear monitoring device (10) according to one of the previous claims, **characterized in that** the magnet (12) is designed as a permanent magnet, in particular as a dipole magnet, whose magnetic field covers the measuring positions.

7. Wear monitoring device (10) according to one of the previous claims, **characterized in that** the wear monitoring device (10) comprises a guide channel (20) for the rolling elements (22), the magnetic field sensor arrangement (14) and the magnet (12) being arranged on a scanning wall (24) of the guide channel (20).

8. Wear monitoring device (10) according to claim 7, **characterized in that** a magnetic field exit surface of the magnet (12) is parallel or vertical to a longitudinal extent of the scanning wall (24) in the circulation direction U.

9. Wear monitoring device (10) according to claim 7 or 8, **characterized in that** the flux density of the measuring magnetic field and/or the material and/or the thickness of the scanning wall (24) are selected such that rolling elements (22) detected by the measuring magnetic field are attracted by the measuring magnetic field preferably regardless of position towards the scanning wall (24), where rolling elements (22) detected in particular by the measuring magnetic field also mutually attract.

10. Wear monitoring device (10) according to one of the previous claims, **characterized in that** the magnetic field sensor arrangement (14) comprises magnetoresistive magnetic field sensors (16, 18), in particular AMR, CMR, TMR or GMR magnetic field sensors (16, 18), or Hall sensors.

11. Wear monitoring device (10) according to one of the previous claims, **characterized in that** the evaluation unit is configured to emit a warning signal when the determined diameter of the rolling elements (22) falls below a predefined threshold value.

12. Wear monitoring device (10) according to one of the previous claims, **characterized in that** a speed sensor is comprised which determines a speed of the ball screw, or a position or velocity sensor is comprised that determines a movement velocity of the linear bearing, the evaluation unit incorporating geometrical parameters of the ball screw or of the linear bearing and the speed or movement velocity for determination of the diameter and/or changes in the diameters of the rolling elements (22).

13. Ball screw with a wear monitoring device (10) according to one of the previous claims, the wear monitoring device (10) being arranged on a ball return channel of the ball screw.

## Revendications

1. Dispositif de surveillance d'usure (10) pour un élément de machine, lequel présente un réseau d'éléments roulants ferromagnétiques (22), en particulier pour une vis à billes ou un palier linéaire, permettant de surveiller l'usure des éléments roulants (22), avec au moins un aimant (12) servant à générer un champ magnétique de mesure, avec un système de capteurs de champ magnétique (14) pour mesurer une densité de flux du champ magnétique de mesure, sachant que le système de capteurs de champ magnétique (14) présente au moins un premier capteur de champ magnétique (16) pour mesurer la densité de flux en un premier point de mesure et un second capteur de champ magnétique (18) pour mesurer la densité de flux en un second point de mesure distant du premier point de mesure, sachant que les points de mesure sont sélectionnés de telle sorte que, pendant le fonctionnement de l'élément de machine, des éléments roulants (22) tournant dans un sens de rotation U franchissent les points de mesure à proximité immédiate les uns des autres et qu'une modification du champ magnétique de mesure ainsi provoquée peut être détectée à l'un des points de mesure par le capteur de champ magnétique correspondant (16, 18), et avec une unité d'évaluation reliée au système de capteurs de champ magnétique (14) pour détecter et évaluer les densités de flux mesurées par les capteurs de champ magnétique (16, 18), sachant que l'unité d'évaluation est conçue pour déterminer les diamètres et/ou les modifications des diamètres des éléments roulants (22) en se basant sur la comparaison des densités de flux mesurées par les capteurs de champ magnétique (16, 18), **caractérisé en ce que** l'unité d'évaluation est conçue pour détecter et évaluer les évolutions temporelles périodiques des densités de flux mesurées par les capteurs de champ magnétique (16, 18), et que la comparaison des densités de flux mesurées par les capteurs de champ magnétique (16, 18) comprend la détermination d'une différence de phase entre les évolutions temporelles périodiques des densités de flux mesurées par les capteurs de champ magnétique (16, 18).

2. Dispositif de surveillance d'usure (10) selon la revendication 1, **caractérisé en ce que** la détermination des modifications du diamètre des éléments roulants (22) comprend la détermination des écarts des points de gravité, en particulier des valeurs moyennes des écarts sur au moins une quantité partielle des éléments roulants (22).

3. Dispositif de surveillance d'usure (10) selon l'une des revendications précédentes, **caractérisé en ce que** l'écart des points de mesure est inférieur au diamètre nominal des éléments roulants (22), de préférence inférieur à un demi-diamètre nominal, en particulier égal à un quart de diamètre nominal.

4. Dispositif de surveillance d'usure (10) selon l'une des revendications précédentes, **caractérisé en ce que** le premier capteur de champ magnétique (16) et le second capteur de champ magnétique (18) comprennent chacun un pont de mesure avec deux demi-ponts (16a, 16b, 18a, 18b), sachant que les demi-ponts (16a, 16b, 18a, 18b) des deux capteurs de champ magnétique (16, 18) sont imbriqués et décalés l'un par rapport à l'autre dans le sens de rotation U, et de préférence les résistances de pont magnétorésistives (26) de chaque demi-pont (16a, 16b, 18a, 18b) sont espacées dans le sens de rotation U.

5. Dispositif de surveillance d'usure (10) selon la revendication 3 et 4, **caractérisé en ce que** l'écart des demi-ponts adjacents (16a, 18a, 16b, 18b) correspond approximativement à un quart du diamètre d'un élément roulant (22), sachant que l'écart entre deux résistances de pont magnétorésistives (28) de chaque demi-pont (16a,16b, 18a,18b) d'un capteur de champ magnétique (16, 18) correspond approximativement à un demi-diamètre d'un élément roulant (22).

6. Dispositif de surveillance d'usure (10) selon l'une des revendications précédentes, **caractérisé en ce que** l'aimant (12) est conçu sous forme d'un aimant permanent, en particulier un aimant dipôle, dont le champ magnétique recouvre les points de mesure.

7. Dispositif de surveillance d'usure (10) selon l'une des revendications précédentes, **caractérisé en ce que** le dispositif de surveillance d'usure (10) comprend un canal de guidage (20) pour les éléments roulants (22), sachant que le système de capteurs de champ magnétique (14) et l'aimant (12) sont disposés sur une paroi de balayage (24) du canal de guidage (20).

8. Dispositif de surveillance d'usure (10) selon la revendication 7, **caractérisé en ce qu'**une surface de sortie du flux magnétique de l'aimant (12) s'étend parallèlement ou perpendiculairement à une extension longitudinale de la paroi de balayage (24) dans le sens de rotation U.

9. Dispositif de surveillance d'usure (10) selon la revendication 7 ou 8, **caractérisé en ce que** la densité de flux du champ magnétique de mesure et/ou le matériau et/ou l'épaisseur de la paroi de balayage (24) sont sélectionnés de telle sorte que les éléments roulants (22) captés par le champ magnétique de mesure sont attirés vers la paroi de balayage (24) par le champ magnétique de mesure, de préférence indépendamment de leur position, sachant que en particulier les éléments roulants (22) captés par le champ magnétique de mesure s'attirent également mutuellement.

10. Dispositif de surveillance d'usure (10) selon l'une des revendications précédentes, **caractérisé en ce que** le système de capteurs de champ magnétique (14) comprend des capteurs de champ magnétique magnétorésistifs (16, 18), en particulier des capteurs de champ magnétiques AMR, CMR, TMR ou GMR (16, 18), ou des capteurs à effet Hall.

11. Dispositif de surveillance d'usure (10) selon l'une des revendications précédentes, **caractérisé en ce que** l'unité d'évaluation est conçue pour émettre un signal d'avertissement lorsque le diamètre déterminé des éléments roulants (22) passe en dessous d'une valeur seuil prédéfinie.

12. Dispositif de surveillance d'usure (10) selon l'une des revendications précédentes, **caractérisé en ce qu'**il comprend un capteur de vitesse de rotation, lequel détermine une vitesse de rotation de la vis à billes, ou un capteur de position ou de vitesse, lequel détermine une vitesse de déplacement du palier linéaire, sachant que l'unité d'évaluation intègre des paramètres géométriques de la vis à billes ou du palier linéaire et de la vitesse de rotation ou de la vitesse de déplacement pour déterminer le diamètre et/ou les modification du diamètre des éléments roulants (22).

13. Vis à billes avec un dispositif de surveillance d'usure (10) selon l'une des revendications précédentes, sachant que le dispositif de surveillance d'usure (10) est disposé sur un canal de retour de billes de la vis à billes.
